# EUROPÄISCHE PATENTSCHRIFT

(11) **EP 3 985 994 B1**
(45) Veröffentlichungstag und Bekanntmachung des Hinweises auf die Patenterteilung: **31.07.2024**
(21) Anmeldenummer: 21193865.9
(22) Anmeldetag: 30.08.2021
(51) Int. Cl.: H04R 1/10, H04R 25/00

(54) **VERFAHREN ZUM BETRIEB EINES HÖRHILFEGERÄTS SOWIE HÖRHILFEGERÄT**
HEARING AID AND METHOD FOR OPERATING A HEARING AID
PROCÉDÉ DE FONCTIONNEMENT D'UN APPAREIL D'AIDE AUDITIVE ET APPAREIL D'AIDE AUDITIVE

(30) Priorität: 15.10.2020 DE 102020213051
(43) Veröffentlichungstag der Anmeldung: 20.04.2022
(73) Patentinhaber: Sivantos Pte. Ltd., Singapore 539775 (SG)
(72) Erfinder: KAMKAR-PARSI, Homayoun, 91058 Erlangen (DE); LUGGER, Marko, 91365 Weilersbach (DE); GÖKAY, Umut, 55116 Mainz (DE)
(74) Vertreter: FDST Patentanwälte

(56) Entgegenhaltungen:
- DE-A1- 102005 032 274
- US-A1- 2020 314 565

## Beschreibung

Die Erfindung betrifft ein Verfahren zum Betrieb eines Hörhilfegeräts mit einem Gehörgangmikrofon, bei dem Schall im Gehörgang des Trägers vom Gehörgangmikrofon erfasst und ein dem Schall entsprechendes Signal vom Gehörgangmikrofon ausgegeben wird. Des Weiteren betrifft die Erfindung ein solches Hörhilfegerät.

Hörhilfegeräte, insbesondere für Schwerhörende, werden in unterschiedlichen Bauformen bereitgestellt, um den individuellen Bedürfnissen des Trägers entgegen zu kommen. Beispielsweise sind die Hörhilfegeräte als Hinter-dem-Ohr-Hörgerät (HdO, behind the ear "BTE"), als Hörgerät mit externem Hörer (reciever in canal "RIC") oder als In-dem-Ohr-Hörgeräte ("IdO") ausgebildet.

Hörhilfegeräte weisen zumindest einen elektroakustischen Wandler, insbesondere ein Mikrofon auf, mit dem (Luft-)Schall aus der Umgebung des Trägers erfasst wird. Ein entsprechendes vom Wandler ausgegebenes Signal wird von einer Signalverarbeitungseinheit hinsichtlich der Bedürfnisse des Trägers bearbeitet, insbesondere verstärkt. Das bearbeitete Signal wird an einen Hörer (Lautsprecher) geleitet und von diesem als Schall in den Gehörgang oder an das Trommelfell des Trägers ausgegeben.

Der Träger (Benutzer) eines Hörhilfegeräts nimmt seine eigene Stimme aufgrund des Körperschalls und/oder - sofern das Hörhilfegerät dessen Gehörgang teilweise oder ganz verschließt - aufgrund des Okklusionseffekts anders wahr als sie vom Mikrofon des Hörhilfegeräts, welches typischerweise Luftschall erfasst, aufgenommen wird.

Für eine vom Träger als normal empfundene Wahrnehmung der eigenen Stimme und externer Audioquellen ist es somit erforderlich, dass die eigene Stimme des Trägers und andere externen Audioquellen unterschiedlich bearbeitet werden. Hierzu ist zunächst die eigene Stimme des Trägers zu erkennen.

Ein Verfahren zum Erkennen der eigenen Stimme des Trägers ist beispielsweise aus der EP 3 451 705 A1 bekannt. Bei dem dort beschriebenen Verfahren zum schnellen Erkennen der eigenen Stimme eines Hörhilfegeräteträgers werden die Audiosignale von mindestens einem ersten Mikrofon und einem zweiten Mikrofon verwendet. Das Audiosignal des ersten Mikrofons wird mit einem ersten Filter gefiltert, welches die eigene Stimme des Hörgeräteträgers abschwächt. Weiterhin wird das Audiosignal des zweiten Mikrofons mit einem zweiten Filter geschwächt, welches eine externe Audioquelle abschwächt. Die Ausgangssignale der beiden Filter werden miteinander verglichen und anhand des Ergebnisses die Stimme des Hörhilfegeräteträgers erkannt. Das erste Filter kann dabei ein adaptives Filter sein. Das erste Filter ist beispielsweise durch einen adaptiven Algorithmus realisiert, welcher adaptiv die Filterparameter des ersten Filter ermittelt, sodass diese Filterparameter bei einem Training mit der eigenen Stimme des Hörhilfegeräteträgers ermittelt werden können. Das Training findet dabei entweder im Rahmen eines Fittings beim Hörgeräteakustiker durchgeführt oder durch den Träger selbst während seiner normalen Sprachaktivität, wobei eine zusätzliche Referenz-Information über eine vorliegende Sprechaktivität beispielsweise über eine Fernbedienung oder ein Smartphone übermittelt wird.

Weiterhin ist aus der DE 10 2016 203 987 A1 ist ein Verfahren zum Betrieb eines Hörgeräts bekannt, bei dem ein mittels eines Mikrofons aufgenommenes Geräusch hinsichtlich dessen Übereinstimmung mit der Stimme des Hörgeräteträgers analysiert wird. Als Ergebnis der Analyse wird ein Merkmalswert ausgegeben welcher mit einem Schwellenwert verglichen wird. Dabei ist der Schwellenwert umgebungsabhängig, also entsprechend einer ermittelten Umgebung, eingestellt. Die Festlegung des Schwellenwertes für die jeweilige Umgebungssituation erfolgt dabei entweder im Rahmen einer Fitting-Session beim Akustiker, in einem speziellen Kalibrierbetrieb oder im normalen Betrieb des Hörgeräts.

In der DE10 2005 032 274 A1 ist eine Hörvorrichtung und ein Verfahren zu dessen Betrieb dargestellt. Zur Detektion der eigenen Stimme des Hörgeräteträgers werden ein Schallsignal eines ersten Mikrofons zur Aufnahme eines Umgebungsschalls und ein Schallsignal eines zweiten Mikrofons zur Aufnahme eines Gehörgangsschalls analysiert. Hierzu werden die Pegel der beiden Schallsignale miteinander verglichen und anhand des Vergleichs auf das Vorhandensein der eigenen Stimme geschlossen.

In der EP 3 005 731 B1 ist ein Verfahren zum Betrieb eines Hörgeräts beschrieben, das ein Umgebungsmikrofon, eine Signalverarbeitungseinheit, einen Hörer und ein Gehörgangmikrofon umfasst. Dabei wird das von der Signalverarbeitungseinheit mit einem Filter verarbeitete Audiosignal des Umgebungsmikrofons mit einer Übertragungsfunktion gefiltert, die mindestens eine Übertragungsfunktion von einem Ausgang des Hörers zu einem Eingang des Gehörgangmikrofons umfasst, wenn das Hörgerät eingeschaltet und in einem Gehörgang des Benutzers getragen ist. Es wird eine Differenz zwischen dem vom Gehörgangmikrofon aufgenommenen Audiosignal und dem gefilterten Signal berechnet und basierend auf dem Unterschied das Vorhandensein einer eigenen Stimme des Benutzers erkannt.

Aus der US 2019/0075406 A1 ist ein Hörgerät bekannt, das ein am oder im Gehörgang des Benutzers zu tragendes Gehörgangmikrofon sowie einen weiteren Hinter-dem-Ohr-Mikrofon aufweist, das am oder hinter einem Ohr des Benutzers angeordnet ist. Die eigene Stimme des Benutzers wird dabei erkannt, wenn ein Schalldrucklevel am Gehörgangmikrofon zumindest 2,5 db größer ist als am Hinter-dem-Ohr-Mikrofon. Das Hörgerät weist eine Beamformer-Filtereinheit aus einem adaptiven Algorithmus auf, um ein räumlich gefiltertes Signal bereitzustellen. Dabei kann die Beamformer-Filtereinheit einen vordefinierten und/oder adaptiv aktualisierten eigenen Sprachstrahlformer umfassen, der auf den Mund des Benutzers fokussiert ist.

Die Lehre der US 2020/314565 A1 betrifft ein Hörgerät mit einem Vibrationssensor zum Erfassen der über den Kopf eines Benutzers zum Hörgerät geleitete Vibration. Bei Betrieb des Hörgeräts wird ein Vorhandensein einer Eigenstimm-Charakteristik bei einer dieser zugeordneten Vibrationsfrequenz identifiziert.

Der Erfindung liegt die Aufgabe zugrunde, ein Verfahren zum Betrieb eines Hörhilfegeräts anzugeben, bei dem ein Training der Eigenstimmerkennung möglichst effektiv und/oder möglichst komfortabel für den Träger des Hörhilfegeräts erfolgt. Des Weiteren soll ein solches Hörhilfegerät angegeben werden.

Hinsichtlich des Verfahrens wird die Aufgabe erfindungsgemäß gelöst durch die Merkmale des Anspruchs 1. Hinsichtlich des Hörhilfegeräts wird die Aufgabe erfindungsgemäß gelöst durch die Merkmale des Anspruchs 10. Vorteilhafte Weiterbildungen und Ausgestaltungen sind Gegenstand der Unteransprüche. Dabei geltend die Ausführungen im Zusammenhang mit dem Verfahren sinngemäß auch für das Hörhilfegerät und umgekehrt.

Das Verfahren dient dem Betrieb eines Hörhilfegeräts. Unter einem solchen Hörhilfegerät ist dabei ein Gerät zur Versorgung einer hörgeschädigten oder hörbeeinträchtigten Person verstanden, welche das Gerät - zweckmäßigerweise durchgängig oder die meiste Zeit - trägt, um ein Gehördefizit auszugleichen. Beispielsweise ist dieses als ein Hinter-dem-Ohr-Hörgerät oder als ein In-dem-Ohr-Hörgerät ausgebildet.

Das Hörhilfegerät weist ein Gehörgangmikrofon zum Erfassen von Schall, insbesondere Luftschall, im Gehörgang des Trägers (Benutzers) des Hörhilfegeräts auf. Insbesondere ist das Gehörgangmikrofon dazu vorgesehen und eingerichtet bei Benutzung des Hörhilfegeräts in den Gehörgang des Nutzers eingebracht bzw. dort getragen zu werden. Wird Schall im Gehörgang vom Gehörgangmikrofon erfasst, gibt dieses ein dem Schall entsprechendes, also ein den Schall repräsentierendes, Signal aus. Dieses Signal wird im Folgenden auch als Gehörgangs-Signal bezeichnet.

Zweckmäßigerweise umfasst das Hörhilfegerät weiterhin ein zweites Mikrofon, nämlich ein Umgebungsmikrofon, zum Erfassen von Schall aus der Umgebung des Trägers. In analoger Weise zum Gehörgangmikrofon gibt das Umgebungsmikrofon ein dem erfassten Umgebungsschall entsprechendes weiteres Signal aus, welches im Folgenden als Umgebungs-Signal bezeichnet wird, wenn Schall aus der Umgebung des Trägers des Hörhilfegeräts vom Umgebungsmikrofon erfasst wird.

Weiterhin weist das Hörhilfegerät eine Eigenstimmerkennungseinheit auf. Diese ist beispielsweise ein Teil einer Steuereinheit oder alternativ ist diese als eine zur Steuereinheit separate Einheit ausgebildet. Beispielsweise ist die Eigenstimmerkennungseinheit als eine integrierte Schaltung realisiert. Das Gehörgangs-Signal und/oder das Umgebungs-Signal werden vom Gehörgangmikrofon bzw. vom Umgebungsmikrofon an die Eigenstimmerkennungseinheit oder an die Steuervorrichtung geleitet.

Die Eigenstimmerkennungseinheit dient der Durchführung einer als Eigenstimmerkennung oder als Eigenstimmdetektion (engl.: "own voice detection", OVD) bezeichneten Analyse des Umgebungs-Signals und/oder des Gehörgangs-Signals dahingehend, ob die eigene Stimme des Trägers vorliegt oder nicht.

Geeigneter Weise wird die Analyse des jeweiligen Signals anhand eines Algorithmus oder anhand eines Filters oder mehrerer Filter durchgeführt. Insbesondere ist der Algorithmus, der oder einer der Filter derart ausgebildet, dass bei dessen bzw. deren Anwendung ein der eigenen Stimme des Trägers entsprechendes Signal möglichst stark abgeschwächt wird. Im Zuge der Analyse des Umgebungs-Signals und/oder des Gehörgangs-Signals wird dann anhand des Betrags der Abschwächung auf das Vorhandensein der eigenen Stimme geschlossen. Hierbei wird also ein Schallweg vom Mund des Trägers zum Hörhilfegerät möglichst genau abgebildet und eine diesem Schallweg entsprechende, also zu diesem Schallweg korrespondierende, Übertragungsfunktion für die Abschwächung des Signals verwendet.

Dabei ist die Eigenstimmerkennung adaptiv. Mit anderen Worten sind der Algorithmus oder der Filter oder die Filter anhand welchem die Analyse des jeweiligen Signals vorgenommen wird, anpassbar und veränderbar. Insbesondere ist einer deren Parameter oder einer deren Koeffizienten anpassbar und veränderbar. Bei einem Training der Eigenstimmerkennung werden der Algorithmus bzw. der Filter eingestellt, insbesondere deren Parameter und/oder deren Koeffizient angepasst. Vorzugsweise werden der Algorithmus bzw. der Filter derart eingestellt, dass derjenige Teil des analysierten Signals, welcher Teil der eigenen Stimme des Trägers entspricht, stärker abgeschwächt wird als vor dem Training. Alternativ hierzu werden der Algorithmus bzw. der Filter derart eingestellt, dass eine Abschwächung, insbesondere ein Betrag der Abschwächung, desjenigen Teils des analysierten Signals, welcher Teil der eigenen Stimme des Trägers entspricht, an einen vorgegebenen Wert angleicht oder einen vorgegebenen, und beispielsweise einstellbaren, Schwellenwert unterschreitet.

Verfahrensgemäß wir ein solches Training der adaptiven Eigenstimmerkennung in Abhängigkeit des vom Gehörgangmikrofon ausgegebenen (Gehörgangs-)Signals, insbesondere in Abhängigkeit einer Eigenschaft dessen, gestartet. Sofern das Training gestartet wird, kann auch durch ein vorangegangenes Training bereits angepasstes Filter oder Algorithmus weiter angepasst werden. Vorzugsweise wird das Training gestartet oder ein bereits gestartetes Training fortgesetzt, sofern das Gehörgangs-Signal oder eine, besonders bevorzugt lediglich, aus dem Gehörgangs-Signal abgeleitete Größe eine vordefinierte Eigenschaft aufweist.

Der Erfindung liegt die Erkenntnis zugrunde, dass (lediglich) anhand des Gehörgangs-Signals besonders zuverlässig bestimmt werden kann, ob das erfasste Gehörgangs-Signal und ggf. das Umgebungs-Signal für ein Training geeignet sind. Somit erfolgt das Training besonders zuverlässig und effektiv.

Bevorzugt wird für die Bestimmung, wie das Training gesteuert wird, zusätzlich zum Gehörgangs-Signal kein weiteres von einem anderen Mikrofon aufgenommenes Signal, insbesondere das Umgebungs-Signal herangezogen.

Gemäß einer geeigneten Ausgestaltung des Verfahrens wird das Gehörgangs-Signal hinsichtlich des Vorhandenseins der eigenen Stimme analysiert, und, sofern die eigene Stimme erkannt wird, wird das Training gestartet bzw. - sofern das Training bereits gestartet wurde - fortgesetzt. Sofern die eigene Stimme nicht erkannt wird, wird kein Training gestartet, oder ein bereits gestartetes Training beendet oder unterbrochen (pausiert). Dabei ist es anhand des Gehörgangs-Signals vergleichsweise zuverlässig ermöglich, zu bestimmen, ob die eigene Stimme des Trägers des Hörhilfegeräts vorhanden ist, also ob der Träger selbst spricht. Anhand des Signals lässt sich also ein besonders zuverlässiger Indikator für das Vorhandensein der eigenen Stimme ermitteln.

Für die Analyse des Gehörgangs-Signals hinsichtlich des Vorhandenseins der eigenen Stimme wird gemäß einer geeigneten Ausgestaltung der Pegel des Gehörgangschalls oder ein entsprechender Wert des Gehörgangs-Signals mit einem vorgegebenen Schwellenwert verglichen, wobei für unterschiedliche spektrale Bereiche, also für unterschiedliche Frequenzbänder, des Schalls bzw. des Signals unterschiedliche Schwellenwerte vorgegeben werden können. Überschreitet der Pegel bzw. das Gehörgangs-Signals den Schwellenwert, wird auf die eigene Stimme geschlossen und das Training gestartet bzw. fortgesetzt.

Alternativ oder zusätzlich wird für die Analyse des Gehörgangs-Signals hinsichtlich des Vorhandenseins der eigenen Stimme das Gehörgangs-Signal anhand einer spektralen Analyse auf für die eigene Stimme des Trägers charakteristische Merkmale hin untersucht, welche sich beispielsweise aus dem Schallweg vom Mund durch den Kopf zum Gehörgang des Trägers ergeben. Beispielsweise wird hierzu eine Absorption in Abhängigkeit der Frequenz abgeschätzt oder bestimmt.

Weiter alternativ oder zusätzlich wird für die Analyse des Gehörgangs-Signals hinsichtlich des Vorhandenseins der eigenen Stimme ein Algorithmus oder ein Filter der Spracherkennung auf das Gehörgangs-Signal angewandt und eine Abschwächung dessen mit einem vorgegebenen Schwellenwert verglichen.

Erfindungsgemäß wird das Training automatisch während eines Normalbetriebs, und somit online, gestartet und durchgeführt bzw. fortgesetzt. Unter dem Normalbetrieb ein Betriebsmodus des Hörhilfegeräts zu verstehen, der insbesondere gekennzeichnet ist durch die bestimmungsgemäße Verwendung des Hörhilfegeräts zum Ausgleich eines Gehördefizit des Trägers anhand einer Verarbeitung eines von zumindest einem der Mikrofone aufgenommenen Schalls und anhand der Ausgabe eines entsprechenden Ausgangsschalls an das Gehör des Trägers. Dabei treten

keine vorab definierten Sprachsequenzen und/oder Geräuschsequenzen zum Zwecke eines Trainings der Eigenspracherkennung auf. Für das Training, insbesondere für das Anpassen des Algorithmus oder des Filters oder der Filter im Zuge des Trainings, ist kein mittels eines Protokolls definierter Prozess notwendig, der vorgegebene Sprachsequenzen umfasst. Somit kann der Trainingsprozess im Rahmen des allgemeinen Fittings (Anpasssitzung) beim Akustiker oder im Rahmen eines durch den Träger selbst anhand des Protokolls definierten Prozesses entfallen. Dennoch kann das Training bereits auch im Zuge der Fitting-Session (Anpasssitzung) beim Akustiker während eines normalen Gesprächs erfolgen, welches also keine vorab definierten Sprachsequenzen und/oder Geräuschsequenzen aufweist.

Zudem ist es nicht weiter notwendig, dass eine zusätzliche Referenz-Information, insbesondere vom Nutzer, über dessen vorliegende Sprachaktivität anhand einer Schnittstelle, beispielsweise einem Smartphone oder einer Fernbedienung, zu übermitteln, um das Training zu starten. Zusammenfassend findet das Training der Eigenstimmerkennung besonders komfortabel für den Träger statt.

Gemäß einer vorteilhaften Ausgestaltung des Verfahrens wird anhand des Gehörgangs-Signals und/oder anhand des Umgebungs-Signals bestimmt, ob die akustische Umgebung des Hörhilfegeräts für das Training geeignet ist. Insbesondere wird die akustische Umgebung hierzu hinsichtlich eines Rauschens und/oder hinsichtlich einer Nachhallzeit analysiert. Das Training wird in Abhängigkeit des Ergebnisses dieser Analyse gestartet oder weiter durchgeführt (fortgesetzt), sofern die Umgebung als geeignet bestimmt wurde, andernfalls wird das Training beendet oder vorzugsweise unterbrochen, bis die Umgebung wieder als geeignet bestimmt wird.

Beispielsweise wird ein Schwellenwert für einen Rauschwert, insbesondere für einen Pegel des Rauschens, vorgegeben, wobei das Training nur gestartet wird, sofern dieser Schwellenwert unterschritten wurde. Geeigneter Weise wird alternativ ein Signal-zu-Rausch-Verhältnis, das kurz als SNR bezeichnet wird, für das Gehörgangs-Signal und/oder für das Umgebungs-Signal bestimmt und mit einem vorgegebenen Schwellenwert verglichen. Der Schwellenwert beträgt dabei beispielsweise 15 db (Dezibel), 20 db oder 25 db für das Signal-zu-Rausch-Verhältnis. Bei Überschreiten des Schwellenwertes durch das aus dem entsprechenden Signal ermittelten Signal-zu-Rausch-Verhältnis kann das Training gestartet bzw. fortgesetzt werden und wird zweckmäßigerweise auch gestartet bzw. fortgesetzt.

Insbesondere wird der Rauschwert, insbesondere der Pegel des Rauschens in der akustischen Umgebung des Hörhilfegeräts, mittels eines Störgeräuscheschätzers, also eines sogenannten "noise-estimators", welcher z.B. auf dem "minimum statistics approach" basiert, für das Gehörgangs-Signal bestimmt. Beispielsweise wird hierzu das Gehörgangs-Signal selbst herangezogen. Für eine genauere Bestimmung des Rauschwertes wird zunächst das Gehörgangs-Signal entsprechend einer vorbekannten Dämpfung des Schalls der Umgebung durch ein das Gehörgangmikrofon tragendes Gehäuse und/oder durch einen Dom verstärkt und der Rauschwert des verstärkten Signals mittels eines Störgeräuscheschätzers ermittelt.

Zweckmäßigerweise wird auch der Rauschwert für das Umgebungssignal mittels des Störgeräuscheschätzers bestimmt. Vorzugsweise wird das Training nur dann gestartet bzw. fortgesetzt, wenn der Rauschwert des Gehörgangs-Signals sowie der Rauschwert des Umgebungs-Signals einen vorgegebenen oder jeweils einen zugeordneten Schwellenwert unterschreiten.

Alternativ oder zusätzlich zur Bestimmung des Rauschwertes wird die akustische Umgebung des Hörhilfegeräts hinsichtlich einer Nachhallzeit (englisch: reverberation time) analysiert. Sofern die ermittelte Nachhallzeit kleiner als ein vorgegebener Schwellenwert beispielsweise kleiner als 500 ms, insbesondere kleiner 300 ms ist, kann das Training gestartet oder weiter durchgeführt werden und wird zweckmäßigerweise auch gestartet oder fortgesetzt.

Auf diese Weise wird vorteilhaft ein ungeeignetes oder sogar falsches Training, insbesondere eine ungeeignete oder falsche Anpassung des Algorithmus oder des Filters oder der Filter der Eigenstimmerkennung, vermieden oder eine Gefahr dessen zumindest reduziert, sodass das Training effektiver ist.

Vorzugsweise wird die akustische Umgebung des Hörhilfegeräts dann analysiert, wenn die eigene Stimme wie oben dargelegt anhand des Gehörgangs-Signals, beispielsweise anhand dessen Pegel oder anhand dessen spektralen Analyse, erkannt wurde. Darauffolgend wird - je nach Ergebnis der Analyse der akustischen Umgebung - das Training gestartet bzw. weiter durchgeführt oder beendet oder unterbrochen, bis die Umgebung wieder als geeignet bestimmt wird.

Gemäß einer geeigneten Weiterbildung des Verfahrens wird ein Konvergenzwert (Erkennungswert) bestimmt, geeigneter Weise nach dem Anpassen des Algorithmus oder des Filters oder der Filter im Zuge des Trainings oder nach dem Training. Dieser Konvergenzwert repräsentiert ein Maß oder eine Güte für die Erkennung der eigenen Stimme mittels der Eigenstimmerkennung. Weiterhin wird in Abhängigkeit des Konvergenzwertes ein weiteres Training zugelassen oder das Training fortgesetzt oder ausgelassen.

Beispielsweise wird als Konvergenzwert der Betrag der Dämpfung des Umgebungs-Signals und/oder des Gehörgangs-Signals bei der Anwendung des Algorithmus oder des Filters oder der Filter der Eigenstimmerkennung verwendet. Das Umgebungs-Signal bzw. das Gehörgangs-Signal entspricht dabei im Wesentlichen dem Signal der eigenen Stimme, da wie oben beschrieben das Training in Abhängigkeit des Gehörgangs-Signals, und somit insbesondere bei Vorhandensein der eigenen Stimme, und ggf. nur bei geeigneter akustischer Umgebung stattfindet.

Zweckmäßigerweise wird der Konvergenzwert mit einem vorgegebenen Schwellenwert verglichen, welcher geeigneter Weise einer Dämpfung um 15 db, oder vorzugsweise um 20 db oder alternativ um 25 db entspricht. Ist der Konvergenzwert größer als der Schwellenwert, ist also eine Güte der Erkennung der eigenen Sprache ausreichend groß, wird kein weiteres Training zugelassen oder das Training beendet. In entsprechender Weise wird ein weiteres Training zugelassen oder das Training fortgesetzt, sofern der Konvergenzwert kleiner als der Schwellenwert ist. Beispielsweise erfolgt das weitere Training in einem zeitlichen Mindestabstand zum vorangehenden Training. Alternativ hierzu erfolgt das weitere Training sobald die eigene Stimme erneut anhand des Gehörgangs-Signals erkannt wurde.

Gemäß einer vorteilhaften Ausgestaltung des Verfahrens wird eine Fehlpositionierung des Gehörgangmikrophons im Gehörgang und/oder des Umgebungsmikrofons im oder am Ohr bestimmt. Sofern eine solche Fehlpositionierung erkannt wurde, wird ein weiteres Training der adaptiven Eigenstimmerkennung gestartet.

Vorzugsweise wird dabei das weitere Training in Abhängigkeit des Gehörgangs-Signals gestartet, insbesondere nur dann, wenn anhand dieses Signals in einer der oben dargestellten Variante die eigene Stimme des Trägers erkannt wurde, und/oder wenn die akustische Umgebung des Hörhilfegeräts für das weitere Training geeignet ist.

Eine solche Fehlpositionierung erfolgt beispielsweise beim Aufsetzen oder Tragen einer Brille, eines Huts oder eines Schals. Unter Fehlpositionierung ist dabei eine Abweichung der Position des Gehörgangmikrofons und/oder des Umgebungsmikrofons von derjenigen Position zu verstehen, in welcher die Eigenstimmerkennung trainiert wurde.

Beispielsweise wird aufgrund der Fehlpositionierung ein Schallweg vom Mund des Trägers zum jeweiligen Mikrofon geändert. Infolgedessen besteht die Gefahr, dass der Algorithmus oder der oder die Filter der Eigenstimmerkennung diesen Schallweg nicht korrekt repräsentiert und es zu Fehlern bei der Erkennung der eigenen Stimme oder zu einer fehlerhaften Bestimmung des Rauschwertes kommen kann. Vorteilhaft erfolgt durch das weitere Training nach Erkennen einer Fehlpositionierung eine erneute Anpassung des Algorithmus bzw. des oder der Filter an die neue Position und/oder Lage des jeweiligen Mikrofons. Folglich ist auch die Gefahr einer Fehldetektion der eigenen Stimme oder einer fehlerhaften Bestimmung des Rauschwertes zumindest reduziert.

In geeigneter Ausgestaltung des Verfahrens wird zur Bestimmung der Fehlpositionierung des Umgebungsmikrofons ein Bewegungssensor herangezogen. Dieser ist vorzugsweise in oder am einem das Umgebungsmikrofon haltenden Gehäuse angeordnet. Geeigneter Weise kann anhand des Bewegungssensors dessen Ausrichtung, insbesondere die Position und/oder die Orientierung dessen Achsen, bestimmt werden. Bei starrer Fixierung des Bewegungssensors am das Umgebungsmikrofon starr haltenden Gehäuse ist in vorteilhaft einfacher Art und Weise anhand der Änderung der Positionierung und/oder der Orientierung des Gehäuses eine entsprechende Änderung der Positionierung bzw. der Orientierung der des Umgebungsmikrofons ermöglicht.

Die Bestimmung einer Fehlpositionierung des Gehörgangmikrofons erfolgt beispielsweise durch die Analyse des Gehörgans-Signals. Insbesondere wird hierzu eine Spektrale Analyse dieses Signals durchgeführt, das Signal auf Änderungen für die eigene Stimme charakteristischer Merkmale hin untersucht, und/oder die Übertragungsfunktion auf Änderungen hin untersucht.

Erfindungsgemäß weist ein Hörhilfegerät ein Gehörgangmikrophon sowie eine Eigenstimmerkennungseinheit zur Durchführung zur Durchführung einer adaptiven Eigenstimmerkennung auf. Dabei ist das Hörhilfegerät zum durchführen des Verfahrens in einer der oben beschriebenen Varianten vorgesehen und eingerichtet.

Hierbei ist die Eigenstimmerkennungseinheit derart ausgebildet, dass ein Training für eine adaptive Eigenstimmerkennung in Abhängigkeit eines vom Gehörgangmikrophon ausgegebenen Signals gestartet wird.

Nachfolgend wird ein Ausführungsbeispiel der Erfindung anhand einer Zeichnung näher erläutert. Darin zeigen:
- Fig. 1: schematisch ein Hörhilfegerät mit einem Gehörgangmikrofon, mit einem Umgebungsmikrofon und mit einer Eigenstimmerkennungseinheit, und
- Fig. 2: einen Verfahrensablauf zum Betrieb des Hörhilfegeräts, bei welchem ein Training einer Eigenstimmerkennung in Abhängigkeit eines vom Gehörgangmikrofon ausgegebenen Signals gestartet wird.

Einander entsprechende Teile und Größen sind in allen Figuren stets mit gleichen Bezugszeichen versehen.

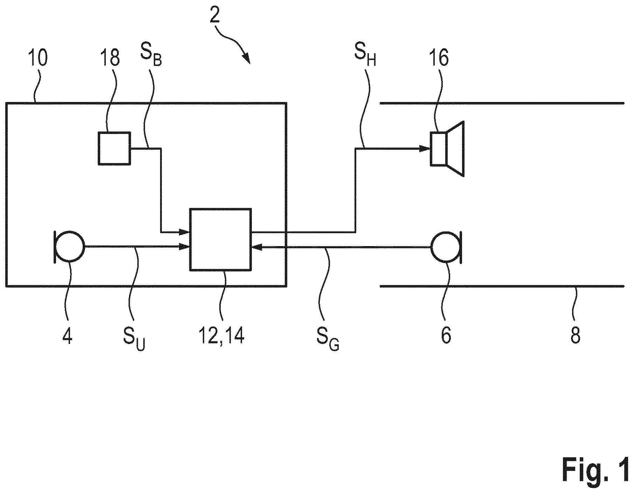

Das in der Fig. 1 dargestellte Hörhilfegerät 2 weist ein Umgebungsmikrofon 4 auf, anhand dessen Schall aus der Umgebung des Trägers des Hörhilfegeräts 2 erfasst werden kann. Zudem weist das Hörhilfegerät 2 ein Gehörgangmikrofon 6 auf, welches der Erfassung von Schall im Gehörgang 8 des Trägers dient. Hierzu ist das Gehörgangmikrofon 6, wenn das Hörhilfegerät 2 vom Träger wie vorgesehen getragen wird, in dessen Gehörgang 8 eingebracht. Dabei ist der Gehörgang 8 in der Fig. 1 lediglich schematisch als zueinander parallele Linien dargestellt.

Gemäß dem in der Fig. 1 dargestellten Ausführung des Hörhilfegeräts 2 ist dieses als ein sogenanntes Hinter-dem-Ohr-Hörgerät ausgebildet. Dabei ist das Umgebungsmikrofon 4 in einem Gehäuse 10 angeordnet, welches hinter dem Ohr, insbesondere zwischen der Ohrmuschel des Trägers und dessen Kopf, getragen wird.

Gemäß einer nicht weiter dargestellten Alternative ist das Hörhilfegerät als ein In-dem-Ohr-Hörgerät ausgebildet, bei dem sowohl das Umgebungsmikrofon 4 als auch das Gehörgangmikrofon 6 in einem gemeinsamen Gehäuse angeordnet sind, welches zum zumindest teilweise einbringen in den Gehörgang vorgesehen und eingerichtet ist.

Das Umgebungsmikrofon 4 sowie das Gehörgangmikrofon 6 ist jeweils ein elektroakustischer Wandler. Diese wandeln den jeweils erfassten Schall in der Umgebung des Trägers, kurz auch als Umgebungsschall bezeichnet, bzw. den erfassten Schall im Gehörgang 8, kurz auch als Gehörgangschall bezeichnet, in ein elektrisches Umgebungs-Signal Su bzw. in ein elektrisches Gehörgangs-Signal SG.

Die Mikrofone 4 und 6 sind signalübertragungstechnisch mit einer Steuereinheit 12 verbunden, in welche eine Eigenstimmerkennungseinheit 14 integriert ist. Die Eigenstimmerkennungseinheit 14 ist also ein Bestandteil der Steuereinheit 12.

Weiterhin weist das Hörhilfegerät 2 einen Hörer 16, hier ein Mikrolautsprecher, auf, welcher ebenfalls im Gehörgang 8 eingebracht ist. Der Hörer 16 ist ebenfalls mit der Steuereinheit 12 signalübertragungstechnisch verbunden, so dass ein Hörer-Signal S_{H} von der Steuereinheit 12 an den Hörer ausgegeben werden kann. Der Hörer 16 wandelt das Hörer-Signal S_{H} in Schall und gibt diesen in den Gehörgang 8 des Trägers aus.

Das Hörhilfegerät 2 umfasst zudem einen als Beschleunigungssensor ausgebildeten Bewegungssensor 18, anhand dessen die Position und/oder die Orientierung des Hörhilfegeräts bestimmt werden können. Der Bewegungssensor 18 ist in dem Gehäuse 10 aufgenommen und dort starr mit diesem gefügt, in welchem auch das Umgebungsmikrofon 4 angeordnet ist.

Die Eigenstimmerkennungseinheit 14 ist dabei dazu eingerichtet, eine Eigenstimmerkennung durchzuführen. Mit anderen Worten werden anhand der Eigenstimmerkennungseinheit 14 das Umgebungssignal Su und/oder das Gehörgangs-Signal S_{G} hinsichtlich des Vorhandenseins der eigenen Stimme des Trägers analysiert. Das Umgebungs-Signal Su und/oder das Gehörgangs-Signal S_{G} werden dabei von der Steuerungseinheit 12 bzw. von der Eigenstimmerkennungseinheit 14 verarbeitet, wobei die Verarbeitung davon abhängig ist ob die eigene Stimme des Trägers erkannt wurde. Als Ergebnis der Verarbeitung wird das Hörer-Signal S_{H} erzeugt und an den Hörer 16 ausgegeben.

Die Erkennung der eigenen Stimme durch die Eigenstimmerkennung erfolgt dabei anhand einer Analyse der Signale Su und S_{G} mittels einer Anzahl an Filter F, also ein Filter oder mehr als ein Filter, auf. Der bzw. die Filter F sind dabei adaptiv ausgebildet. Somit sind diese, insbesondere im Zuge eines Trainings, veränderbar oder anpassbar. Zusammenfassend ist die Eigenstimmerkennung adaptiv. Der oder zumindest einer der Filter F ist dabei derart ausgebildet, dass bei dessen Anwendung ein der eigenen Stimme des Trägers entsprechendes Signal oder derjenige Teil eines zu analysierenden Signals, welcher der eignen Stimme entspricht, möglichst stark abgeschwächt wird. Ein anhand dieses Filters F analysiertes Signal Su oder S_{G} wird also stärker abgeschwächt je mehr dieses der eigenen Stimme des Trägers entspricht.

Gemäß einer nicht weiter dargestellten Alternative wird für die Erkennung der eigenen Stimme in analoger Weise ein Algorithmus verwendet, der die Signale Su und/oder S_{G} analysiert.

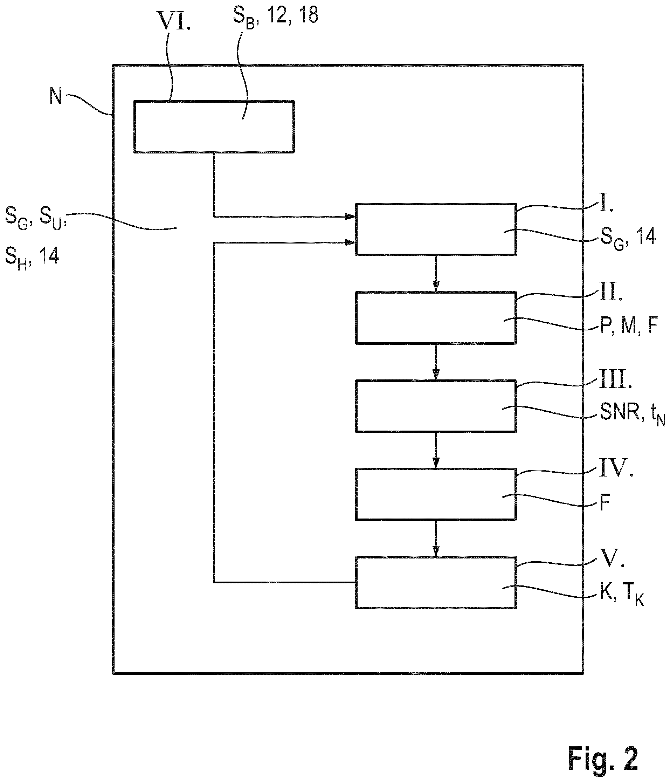

Die Eigenstimmerkennungseinheit 14 ist derart ausgebildet ist, dass ein Training der adaptiven Eigenstimmerkennung in Abhängigkeit des vom Gehörgangmikrophon 6 ausgegebenen Signals S_{G} gestartet wird, was nachfolgend anhand der Fig. 2 näher dargestellt wird.

In der Fig. 2 ist zu erkennen, dass das Training während eines Normalbetriebs N erfolgt. Hierbei wird das Gehörgangs-Signal S_{G} und/oder das Umgebungs-Signal Su, insbesondere ständig, von der Steuereinheit 12 bzw. von der Eigenstimmerkennungseinheit 14 bearbeitet und zum Ausgleich eines Gehördefizits des Trägers das Hörer-Signal S_{H} an den Hörer 16 ausgegeben.

Das vom Gehörgangmikrofon 6 ausgegebene Signal S_{G}, welches den Schall im Gehörgang 8 des Trägers entspricht bzw. dieses repräsentiert, wird an die Steuereinheit 12, im speziellen an die Eigenstimmerkennungseinheit 14, geleitet (Schritt I.).

Das Gehörgangsignal S_{G} wird in einem zweiten Schritt II. anhand der Eigenstimmerkennungseinheit 14 hinsichtlich des Vorhandenseins der eigenen Stimme analysiert. Hierzu wird der Pegel P des Gehörgangschalls anhand des Gehörgangs-Signals S_{G} oder ein entsprechender Wert des Gehörgangs-Signals S_{G} mit einem vorgegebenen Schwellenwert verglichen. Sofern dieser Schwellenwert überschritten wird, gilt die eigene Stimme des Trägers als erkannt.

Zusätzlich wird für die Analyse des Gehörgangs-Signals S_{G} hinsichtlich des Vorhandenseins der eigenen Stimme das Gehörgangs-Signals S_{G} eine spektrale Analyse hinsichtlich zumindest eines Merkmals M durchgeführt, welches für die eigene Stimme des Trägers charakteristisch ist.

Weiterhin wird zur (redundanten) Analyse, ob die eigene Stimme des Trägers vorliegt, ein Filter F₁ der Anzahl an Filter F der Spracherkennung auf das Gehörgangs-Signal S_{G} angewandt und eine Abschwächung dessen mit einem vorgegebenen Schwellenwert verglichen. Sofern die Abschwächung größer als der Schwellenwert ist, wird auf das Vorhandensein der eigenen Stimme geschlossen.

Gemäß nicht weiter dargestellten Alternativen wird zur Analyse des Signals S_{G} hinsichtlich des Vorhandenseins der eigenen Stimme lediglich eines oder zwei der oben dargestellten Methoden, also der Bestimmung eines Pegels des Signals S_{G}, dessen spektraler Analyse bzw. die Anwendung eines Filters auf dieses Signal S_{G}, herangezogen.

Das weitere Verfahren wird vorzugsweise nur dann durchgeführt, sofern in Schritt II. die eigene Stimme des Trägers erkannt wurde.

In einem dritten Schritt III. des Verfahrens, welcher hier zeitlich auf den zweiten Schritt folgt, wird anhand des Gehörgangs-Signals S_{G}, ob die akustische Umgebung des Hörhilfegeräts 2 für ein Training geeignet ist. Die akustische Umgebung wird hierzu hinsichtlich eines Rauschens und hinsichtlich einer Nachhallzeit t_{N} analysiert.

Hierzu wird ein Signal-zu-Rausch-Verhältnis SNR für das Gehörgangs-Signal S_{G} bestimmt und mit einem vorgegebenen Schwellenwert verglichen. Hierbei wird das Rauschen mittels eines Störgeräuscheschätzers bestimmt.

Gemäß einer nicht weiter dargestellten Alternative wird zudem auch ein Signal-zu-Rausch-Verhältnis SNR für das Umgebungs-Signal Su mittels des Störgeräuscheschätzers bestimmt.

Bei Erkennen der eigenen Stimme gemäß Schritt II., bei Überschreiten des vorgegebenen Schwellenwertes durch das Signal-zu-Rausch-Verhältnis SNR des Gehörgangs-Signals S_{G}, gegebenenfalls bei Überschreiten des Schwellenwertes durch Signal-zu-Rausch-Verhältnis SNR für das Umgebungs-Signal Su, sowie bei einer Nachhallzeit t_{N} kleiner als ein weiterer vorgegebener Schwellenwert, wird das Training der adaptiven Eigenstimmerkennung gestartet oder, sofern ein Training bereits gestartet wurde, dieses fortgesetzt. Im Zuge des Trainings (Schritt IV.) werden das oder die Filter der Eigenstimmerkennung geändert.

In einem fünften Schritt V. wird ein Konvergenzwert K bestimmt, welcher ein Maß für die Erkennung der eigenen Stimme mittels der Eigenstimmerkennung ist. Als Konvergenzwert K wird hierbei der Betrag der Abschwächung (Dämpfung) des Umgebungs-Signals Su und/oder des Gehörgangs-Signals S_{G} bei Anwendung des oder der Filter F der Eigenstimmerkennung herangezogen. Ist der Konvergenzwert K kleiner als ein weiterer vorgegebener Schwellenwert T_{K} wird ein weiteres Training zugelassen, was in der Fig. 2 anhand des Pfeils von Schritt V. zu Schritt I. dargestellt ist. Sofern der Konvergenzwert K größer als der Schwellenwert T_{K} ist, wird das Training beendet und es erfolgt kein weiteres Training, also wird das weitere Training ausgelassen.

In einem sechsten Schritt VI. Signal S_{B} wird anhand des Bewegungssensors 18 eine Position des Umgebungsmikrofons 4. Hierbei werden Signale S_{B} vom Bewegungssensor 18 an die Steuereinheit 12 ausgegeben. Diese werden von der Steuereinheit 12 hinsichtlich dessen Lage und dessen Orientierung und somit hinsichtlich der Lage und Orientierung Umgebungsmikrofons 4 und des Gehäuses 10 ausgewertet. Sofern eine Fehlpositionierung, also eine Abweichung der Position und/oder der Orientierung des Umgebungsmikrofons von derjenigen Position zu verstehen, in welcher zeitlich vorangehend die Eigenstimmerkennung trainiert wurde, erkannt wurde, wird das oben beschriebene Verfahren ab Schritt 1 erneut durchgeführt, wobei also ein weiteres Training der Eigenstimmerkennung stattfindet. Dies findet auch statt, sofern ein zuvor bestimmter Konvergenzwert K größer als der Schwellenwert T_{K} ist. Auf diese Weise ist die Gefahr einer Fehldetektion der eigenen Stimme oder einer fehlerhaften Bestimmung aufgrund der Fehlpositionierung zumindest reduziert.

Das Bestimmen ob eine Fehlpositionierung vorliegt gemäß Schritt VI., erfolgt dabei automatisch während des Normalbetriebs N. Dies erfolgt dabei wiederkehrend nach einer vorgegebenen Zeitdauer, beispielsweise alle 30 Sekunden.

Zusammenfassend wird das Training der adaptiven Eigenstimmerkennung in Abhängigkeit des vom Gehörgangmikrophon 6 ausgegebenen Signals S_{G} gesteuert. Die Bestimmung, ob das Training gestartet oder fortgesetzt wird, erfolgt dabei automatisch, also ohne eine Eingabe des Benutzers.

Die Erfindung ist nicht auf das vorstehend beschriebene Ausführungsbeispiel beschränkt.

### Bezugszeichenliste

- 2: Hörhilfegerät
- 4: Umgebungsmikrofon
- 6: Gehörgangmikrofon
- 8: Gehörgang
- 10: Gehäuse
- 12: Steuereinheit
- 14: Eigenstimmerkennungseinheit
- 16: Hörer
- 18: Bewegungssensor

- I.: Ausgabe des Gehörgangs-Signals an die Eigenstimmerkennungseinheit
- II.: Analyse hinsichtlich eigener Stimme
- III.: Auswertung der Umgebung des Hörhilfegeräts
- IV.: Training
- V.: Bestimmung des Konvergenzwertes
- VI: Bestimmung einer Fehlpositionierung des Umgebungsmikrofons

- F, F₁: Filter
- K: Konvergenzwert
- M: Merkmal der eigenen Stimme
- N: Normalbetrieb des Hörhilfegeräts
- P: Pegel
- SNR: Signal zu Rausch-Verhältnis
- S_{B}: Signal des Bewegungssensors
- S_{G}: Gehörgangs-Signal
- S_{H}: Hörer-Signal
- Su: Umgebungs-Signal
- t_{N}: Nachhallzeit

## Patentansprüche

1. Verfahren zum Betrieb eines Hörhilfegeräts (2), welches ein Gehörgangmikrofon (6) zum Erfassen von Schall im Gehörgang (8) des Trägers und eine Steuereinheit (12) mit einer Eigenstimmerkennungseinheit (14) zur Durchführung einer adaptiven Eigenstimmerkennung aufweist,
- bei dem Schall im Gehörgang (8) vom Gehörgangmikrofon (6) erfasst und ein dem Schall entsprechendes Gehörgangs-Signal (S_{G}) vom Gehörgangmikrofon (6) ausgegeben wird, und
- bei dem ein Training der adaptiven Eigenstimmerkennung in Abhängigkeit lediglich des vom Gehörgangmikrofon (6) ausgegebenen Signals (S_{G}) gestartet wird,
**dadurch gekennzeichnet,**
- **dass** das Training automatisch während eines Normalbetriebs gestartet wird, bei dem das Gehörgangs-Signal (S_{G}) und/oder ein Umgebungs-Signal (Su) von der Steuereinheit (12) bearbeitet und zum Ausgleich eines Gehördefizits des Trägers ein Hörer-Signal (S_{H}) an einen Hörer (16) ausgegeben,
- wobei im Normalbetrieb für das Training der Eigenspracherkennung keine vorab definierten Sprachsequenzen und/oder Geräuschsequenzen auftreten.

2. Verfahren nach Anspruch 1,
**dadurch gekennzeichnet,**
- **dass** das Gehörgangs-Signal (S_{G}) hinsichtlich des Vorhandenseins der eigenen Stimme analysiert wird, und
- **dass**, sofern die eigene Stimme erkannt wird, das Training gestartet wird, oder das bereits gestartete Training fortgesetzt wird, oder
- **dass**, sofern die eigene Stimme nicht erkannt wird, das Training nicht gestartet wird, oder das bereits gestartete Training beendet oder unterrochen wird.

3. Verfahren nach Anspruch 2,
**dadurch gekennzeichnet,**
**dass** für die Analyse des Gehörgangs-Signals (S_{G}) hinsichtlich des Vorhandenseins der eigenen Stimme
- ein Pegel des Gehörgangs-Signals (S_{G}) bestimmt wird,
- das Gehörgangs-Signals (S_{G}) anhand einer spektralen Analyse auf für die eigene Stimme des Trägers charakteristische Merkmale untersucht wird, und/oder
- ein Filter der Spracherkennung auf das Gehörgangs-Signals (S_{G}) angewendet wird.

4. Verfahren nach einem der Ansprüche 1 bis 3,
**dadurch gekennzeichnet,**
**dass** zur Bestimmung, ob die akustische Umgebung des Hörhilfegeräts für das Training geeignet ist, ein Signal zu Rausch-Verhältnis für das Gehörgangs-Signal (S_{G}) bestimmt und mit einem vorgegebenen Schwellenwert verglichen und/oder eine Nachhallzeit (t_{N}) mit einem Schwellenwert verglichen wird.

5. Verfahren nach Anspruch 4,
**dadurch gekennzeichnet,**
**dass** ein Rauschwerts anhand des Signals (S_{G}) des Gehörgangmikrofons (6) bestimmt wird.

6. Verfahren nach einem der Ansprüche 1 bis 5,
**dadurch gekennzeichnet,**
- **dass** ein Konvergenzwert (K) bestimmt wird, welcher ein Maß oder eine Güte für die Erkennung der eigenen Stimme mittels der Eigenstimmerkennung repräsentiert, und
- **dass** in Abhängigkeit des Konvergenzwertes (K) ein weiteres Training zugelassen oder ausgelassen wird.

7. Verfahren nach einem der Ansprüche 1 bis 6,
**dadurch gekennzeichnet,**
- **dass** eine Fehlpositionierung des Gehörgangmikrophons (6) und/oder des Umgebungsmikrofons (4) bestimmt wird, und
- **dass**, sofern eine solche Fehlpositionierung erkannt wurde, ein weiteres Training der adaptiven Eigenstimmerkennung gestartet wird.

8. Verfahren nach Anspruch 7,
**dadurch gekennzeichnet,**
**dass** zur Bestimmung der Fehlpositionierung des Umgebungsmikrofons (4) ein Bewegungssensor (18) herangezogen wird.

9. Hörhilfegerät (2) mit einem Gehörgangmikrofon (6) sowie mit einer eine Eigenstimmerkennungseinheit (14) zur Durchführung einer adaptiven Eigenstimmerkennung aufweisenden Steuereinheit (12), wobei die Eigenstimmerkennungseinheit (14) derart ausgebildet ist, dass ein Training der adaptiven Eigenstimmerkennung in Abhängigkeit lediglich eines vom Gehörgangmikrophon (6) ausgegebenen Signals automatisch während eines Normalbetriebs (S_{G}) gestartet wird, wobei beim Normalbetrieb das Gehörgangs-Signal (S_{G}) und/oder ein Umgebungs-Signal (Su) von der Steuereinheit (12) bearbeitet und zum Ausgleich eines Gehördefizits des Trägers ein Hörer-Signal (S_{H}) an einen Hörer (16) ausgegeben, wobei im Normalbetrieb für das Training der Eigenspracherkennung keine vorab definierten Sprachsequenzen und/oder Geräuschsequenzen auftreten.

## Claims

1. Method for operating a hearing aid (2) which has an auditory canal microphone (6) for capturing sound in the auditory canal (8) of the wearer and a control unit (12) comprising an own voice recognition unit (14) for carrying out an adaptive own voice recognition,
- wherein sound in the auditory canal (8) is captured by the auditory canal microphone (6) and an auditory canal signal (S_{G}) that corresponds to the sound is output by the auditory canal microphone (6), and
- wherein training of the adaptive own voice recognition is started only on the basis of the signal (S_{G}) output by the auditory canal microphone (6),
**characterized**
- **in that** the training is started automatically during normal operation, in which the auditory canal signal (S_{G}) and/or a surround signal (S_{U}) is processed by the control unit (12) and a receiver signal (S_{H}) is output to a receiver (16) for compensating a hearing deficit of the wearer,
- wherein no speech sequences and/or noise sequences defined in advance are included in normal operation for the purposes of training the own voice recognition.

2. Method according to Claim 1,
**characterized**
- **in that** the auditory canal signal (S_{G}) is analysed in respect of the presence of the own voice and
- **in that** provided the own voice is recognized, the training is started or the already started training is continued or
- **in that** provided the own voice is not recognized, the training is not started or the already started training is finished or interrupted.

3. Method according to Claim 2,
**characterized**
**in that** for the analysis of the auditory canal signal (S_{G}) in respect of the presence of the own voice
- a level of the auditory canal signal (S_{G}) is determined,
- the auditory canal signal (S_{G}) is examined on the basis of a spectral analysis for features that are characteristic of the own voice of the wearer, and/or
- a voice recognition filter is applied to the auditory canal signal (S_{G}).

4. Method according to any one of Claims 1 to 3,
**characterized**
**in that** in order to determine whether the acoustic surroundings of the hearing aid are suitable for training, a signal-to-noise ratio is determined for the auditory canal signal (S_{G}) and compared with a specified threshold and/or a reverberation time (t_{N}) is compared with a threshold.

5. Method according to Claim 4,
**characterized**
**in that** a noise value is determined on the basis of the signal (S_{G}) of the auditory canal microphone (6) .

6. Method according to any one of Claims 1 to 5,
**characterized**
- **in that** a convergence value (K) which represents a measure or quality for recognizing the own voice by means of the own voice recognition is determined and
- **in that** further training is admitted or omitted depending on the convergence value (K).

7. Method according to any one of Claims 1 to 6,
**characterized**
- **in that** a malposition of the auditory canal microphone (6) and/or the surround microphone (4) is determined and
- **in that** provided such a malposition was identified, further training of the adaptive own voice recognition is started.

8. Method according to Claim 7,
**characterized**
**in that** a motion sensor (18) is used to determine malposition of the surround microphone (4).

9. Hearing aid (2) comprising an auditory canal microphone (6) and comprising a control unit (12) having an own voice recognition unit (14) for carrying out an adaptive own voice recognition, wherein the own voice recognition unit (14) is embodied such that training of the adaptive own voice recognition is started automatically during normal operation (S_{G}) only on the basis of a signal output by the auditory canal microphone (6), wherein, during normal operation, the auditory canal signal (S_{G}) and/or a surround signal (S_{U}) is processed by the control unit (12) and a receiver signal (S_{H}) is output to a receiver (16) for compensating a hearing deficit of the wearer, wherein no speech sequences and/or noise sequences defined in advance are included in normal operation for the purposes of training the own voice recognition.

## Revendications

1. Procédé de fonctionnement d'un appareil auditif (2) qui comprend un microphone de conduit auditif (6) destiné à détecter le son dans le conduit auditif de l'utilisateur (8) et une unité de commande (12) pourvue d'une unité de reconnaissance vocale propre (14) destinée à effectuer une reconnaissance vocale propre adaptative, procédé dans lequel
- le son dans le conduit auditif (8) est détecté par le microphone de conduit auditif (6) et un signal de conduit auditif (S_{G}), correspondant au son, est délivré par le microphone de conduit auditif (6), et
- un apprentissage de la reconnaissance vocale propre adaptative est démarré en fonction uniquement du signal (S_{G}) délivré par le microphone de conduit auditif (6),
**caractérisé en ce que**
- l'apprentissage démarre automatiquement pendant un fonctionnement normal, dans lequel le signal de conduit auditif (S_{G}) et/ou un signal d'environnement (S_{U}) est traité par l'unité de commande (12) et un signal de haut-parleur (S_{H}) est délivré à un haut-parleur (16) pour compenser une déficience auditive du porteur,
- aucune séquence vocale et/ou séquence acoustique prédéfinie ne se produisant pendant le fonctionnement normal pour l'apprentissage de la reconnaissance vocale propre.

2. Procédé selon la revendication 1, **caractérisé en ce que**
- le signal de conduit auditif (S_{G}) est analysé pour détecter la présence de la voix propre, et
- si la voix propre est reconnue, l'apprentissage est démarré, ou l'apprentissage déjà démarré est poursuivi, ou
- si la voix propre n'est pas reconnue, l'apprentissage n'est pas démarré, ou l'apprentissage déjà démarré est terminé ou interrompu.

3. Procédé selon la revendication 2, **caractérisé en ce que**, afin d'analyser le signal de conduit auditif (S_{G}) pour détecter la présence de la voix propre,
- un niveau du signal de conduit auditif (S_{G}) est déterminé,
- le signal de conduit auditif (S_{G}) est examiné à l'aide d'une analyse spectrale afin de déterminer les caractéristiques de la voix propre du porteur, et/ou
- un filtre de reconnaissance vocale est appliqué au signal de conduit auditif (S_{G}).

4. Procédé selon l'une des revendications 1 à 3, **caractérisé en ce que**, pour déterminer si l'environnement acoustique de l'appareil auditif est adapté à l'apprentissage, un rapport signal sur bruit pour le signal de conduit auditif (S_{G}) est déterminé et comparé à une valeur seuil spécifiée et/ou un temps de réverbération (t_{N}) est comparé avec une valeur seuil.

5. Procédé selon la revendication 4, **caractérisé en ce qu'**une valeur de bruit est déterminée sur la base du signal (S_{G}) du microphone de conduit auditif (6).

6. Procédé selon l'une des revendications 1 à 5, **caractérisé en ce que**
- une valeur de convergence (K) est déterminée qui représente une mesure ou une qualité de la reconnaissance de la voix propre à l'aide de la reconnaissance vocale propre, et
- un apprentissage supplémentaire est autorisé ou supprimé en fonction de la valeur de convergence (K).

7. Procédé selon l'une des revendications 1 à 6, **caractérisé en ce que**
- le mauvais positionnement du microphone de conduit auditif (6) et/ou du microphone d'environnement (4) est déterminé, et
- si un tel mauvais positionnement a été détecté, un apprentissage supplémentaire de la reconnaissance vocale propre adaptative est démarré.

8. Procédé selon la revendication 7, **caractérisé en ce qu'**un capteur de mouvement (18) est utilisé pour déterminer le mauvais positionnement du microphone d'environnement (4).

9. Appareil d'aide auditive (2) pourvu d'un microphone de conduit auditif (6) et d'une unité de commande (12) comportant une unité de reconnaissance vocale propre (14) afin d'effectuer une reconnaissance vocale propre adaptative, l'unité de reconnaissance vocale propre (14) étant conçue de manière à ce que l'apprentissage de la reconnaissance vocale propre adaptative démarre automatiquement pendant le fonctionnement normal (S_{G}) en fonction uniquement d'un signal délivré par le microphone de conduit auditif (6), pendant un fonctionnement normal le signal de conduit auditif (S_{G}) et/ou un signal d'environnement (S_{U}) étant traité par l'unité de commande (12) et un signal de haut-parleur (S_{H}) étant délivré à un haut-parleur (16) afin de compenser un déficit auditif chez le porteur, aucune séquence vocale et/ou séquence acoustique prédéfinies ne se produisant pendant le fonctionnement normal pour l'apprentissage de la reconnaissance vocale propre.
